Europäisches Patentamt

European Patent Office

Office européen des brevets

(19)

(11) Numéro de publication: **0 338 934**

**A1**

## (12) DEMANDE DE BREVET EUROPEEN

(21) Numéro de dépôt: **89401108.9**

(22) Date de dépôt: **20.04.89**

(51) Int. Cl.4: **C 03 C 4/12**
C 03 C 3/15, C 03 C 3/06

(30) Priorité: **20.04.88 FR 8805239**

(43) Date de publication de la demande:
**25.10.89 Bulletin 89/43**

(84) Etats contractants désignés: **DE GB NL**

(71) Demandeur: **Etablissement Public dit: CENTRE NATIONAL DE LA RECHERCHE SCIENTIFIQUE (CNRS)**
**15, Quai Anatole France**
**F-75007 Paris (FR)**

(72) Inventeur: **Le Flem, Gilles Louis**
**10, rue de la Chênaie**
**F-33170 Gradignan (FR)**

**Parent, Claude Robert**
**180, avenue de la Paillère**
**F-33600 Pessac (FR)**

**Chao, Zhang Jin Cité Universitaire**
**Village I - Batiment A - Chambre 104**
**F-33405 Talence (FR)**

(74) Mandataire: **Nony, Michel et al**
**Cabinet NONY & CIE 29, rue Cambacérès**
**F-75008 Paris (FR)**

(54) **Nouvelles compositions vitreuses luminescentes, leur préparation et leur application.**

(57) Composition vitreuse luminescente de formule :

| Ingrédients | Teneur (en mole %) |
|---|---|
| MnO | m |
| $Ce_2O_3$ | n |
| $Tb_2O_3$ | p |
| $Ln_2O_3$ | q |
| Agent réducteur | t |
| Agent modificateur | u |
| Agent vitrificateur | v |

dans laquelle Ln est Y, Sc, La, Gd, Dy, Yb et Lu ; l'agent modificateur est notamment un oxyde alcalin ou alcalino-terreux, l'agent vitrificateur est à base de $B_2O_3$, $m = 0,1$-10, $n = 0,1$-5, $p = 0,1$-5, $q = 0$-10, $t = 0,5$-3, $u = 10$-38, $v = 55$-75 ; sa préparation et son application comme substance luminescente émettant une lumière blanche.

Fig. 1/2

EP 0 338 934 A1

**Description**

### Nouvelles compositions vitreuses luminescentes, leur préparation et leur application.

La présente invention a pour objet de nouvelles compositions vitreuses luminescentes, leur préparation et leur application.

On sait que l'utilisation des lampes fluorescentes pour l'éclairage présente un grand intérêt, car la consommation d'énergie de ces lampes est nettement inférieure à celle des lampes à incandescence, à intensité lumineuse égale.

Les lampes fluorescentes utilisées actuellement pour l'éclairage sont le plus souvent des lampes à vapeur de mercure sous basse pression, qui émettent notamment un rayonnement ultra-violet de longueur d'onde 254 nm capable d'exciter les luminophores. Les luminophores ont pour fonction de convertir ce rayonnement en lumière visible. Pour reconstituer la lumière blanche, les luminophores sont généralement au nombre de trois, émettant respectivement dans le bleu, le vert et le rouge.

Les luminophores sont appliqués sous la forme d'un revêtement sur la face interne du tube de la lampe. Il en résulte certains inconvénients. En effet, l'application du revêtement constitue une opération supplémentaire dans la fabrication des lampes. En outre, une partie de la lumière émise par les luminophores est réfléchie par les faces du tube et reste à l'intérieur de celui-ci.

La présente invention a pour objet l'obtention d'un luminophore qui est capable d'émettre de la lumière blanche et qui peut être introduit comme élément constitutif du tube en verre de la lampe fluorescente. On évite ainsi les inconvénients qui viennent d'être mentionnés.

Le luminophore le plus utilisé actuellement pour produire de la lumière blanche est un halophosphate de calcium dopé à l'antimoine et au manganèse, qui est obtenu sous forme cristalline, et qui ne peut pas être incorporé dans des compositions vitreuses.

On a maintenant découvert qu'il est possible d'incorporer, dans des compositions vitreuses de borates, un luminophore à base de Ce-Tb-Mn qui est capable d'émettre une lumière blanche par excitation à l'aide d'une radiation ultra-violette convenable, telle que celle d'une lampe à vapeur de mercure sous basse pression. On a également découvert que le cérium, le terbium et le manganèse constituent un système chimiquement compatible dans ces verres. On a découvert en outre que, dans les verres à base de borates, le cérium émet dans le visible, et que le terbium n'est pas excité par l'intermédiaire du cérium, contrairement aux systèmes vitreux antérieurement connus. Cela permet d'obtenir une meilleure utilisation de l'émission du cérium dans la réalisation d'une lumière blanche.

La présente invention a donc pour objet une composition vitreuse luminescente, capable d'émettre une lumière blanche, de formule :

| Ingrédients | Teneur (en mole %) |
|---|---|
| MnO | m |
| $Ce_2O_3$ | n |
| $Tb_2O_3$ | p |
| $Ln_2O_3$ | q |
| Agent réducteur | t |
| Agent modificateur | u |
| Agent vitrificateur | v |

dans laquelle $Ln_2O_3$ représente au moins un oxyde d'yttrium, de scandium ou d'une terre rare choisie parmi La, Gd, Dy, Yb et Lu ; l'agent réducteur est choisi parmi $As_2O_3$, $Sb_2O_3$ et leurs mélanges ; l'agent modificateur est constitué par au moins un des oxydes suivants : oxyde de métal alcalin, oxyde de métal alcalino-terreux, $Al_2O_3$, MgO, ZnO, l'agent vitrificateur est choisi parmi $B_2O_3$ et les mélanges ($B_2O_3$ + $SiO_2$) ne contenant pas plus de 20 mole % de $SiO_2$, m, n, p, q, t, u et v sont des nombres, dont la somme est égale à 100, pouvant varier dans les intervalles suivants :

| | | | |
|---|---|---|---|
| m : | 0,1 | à | 10 |
| n : | 0,1 | à | 5 |
| p : | 0,1 | à | 5 |
| q : | 0 | à | 10 |
| t : | 0,5 | à | 3 |
| u : | 10 | à | 38 |
| v : | 55 | à | 75 |

la teneur en oxyde de métal alcalin pouvant aller de 8% à 22%, la teneur en oxyde de métal alcalino-terreux pouvant aller de 5% à (15-m)%, la teneur en $Al_2O_3$ pouvant varier de 0 à 5%, la somme (q + u) étant au moins égale à 15, et les rapport n/m et n/p pouvant varier, indépendamment, de 0,8 à 1,2 environ. Parmi les compositions vitreuses de l'invention, on citera en particulier celles qui présentent au moins une des caractéristiques suivantes :
- m est dans l'intervalle 0,4 à 2,5 et n et p dans l'intervalle 0,5 à 2 ;
- la somme (q + u) est au moins égale à 20 ;
- v est dans l'intervalle 60-75 ;
- l'agent vitrificateur est $B_2O_3$ ;
- l'oxyde de métal alcalino-terreux est l'oxyde de baryum ou de calcium ;
- l'oxyde de métal alcalin est l'oxyde de lithium, de sodium ou de potassium.

Dans les compositions de l'invention, $Ln_2O_3$ et les agents modificateurs favorisent l'obtention d'un verre. Certains agents modificateurs (par exemple BaO, CaO, $Al_2O_3$) améliorent les propriétés mécaniques et thermiques du verre. Les agents modificateurs permettent en outre d'obtenir un champ cristallin fort qui déplace l'émission du cérium dans le visible, tout en maintenant l'émission du manganèse dans le rouge. L'agent réducteur, présent le plus souvent à raison de 0,5 à 1% en moles environ, permet d'éviter l'oxydation du cérium et du terbium au degré d'oxydation 4, et l'on sait que ce degré d'oxydation est défavorable à la luminescence.

L'invention a également pour objet un procédé de préparation d'une composition vitreuse telle que définie précédemment. Ce procédé est caractérisé par le fait que l'on mélange les ingrédients de départ, sous forme de poudres d'oxydes ou de sels décomposables en oxydes correspondants, que l'on chauffe le mélange sous atmosphère inerte jusqu'à fusion complète, que l'on maintient le mélange à une température au moins égale à la température de fusion complète pendant un temps suffisant pour réaliser une bonne homogénéité du mélange fondu, et que l'on trempe le mélange selon les méthodes connues.

Les produits de départ sont notamment des oxydes tels que : MnO, $Ln_2O_3$, BaO, CaO, $Li_2O$, MgO, ZnO, $Al_2O_3$, $As_2O_3$, $Sb_2O_3$, $SiO_2$. Le cérium et le terbium peuvent être introduits sous la forme, respectivement, des oxydes $CeO_2$ et $Tb_4O_7$ qui sont réduits à l'état d'oxydation 3 pendant la fabrication de la composition vitreuse. Parmi les sels décomposables qui peuvent être utilisés comme produits de départ, on citera notamment les carbonates, les hydroxydes, les citrates, les oxalates etc... On peut citer par exemple les carbonates alcalins et alcalino-terreux, et le carbonate de manganèse $MnCO_3$.

Les produits de départ sont utilisés de préférence sous forme de poudres ayant par exemple une granulométrie pouvant varier de 5 à 50 µm. Les produits de départ sont mélangés puis introduits par exemple dans un creuset de carbone vitreux ou d'alumine. Les creusets de carbone vitreux ont un effet réducteur qui permet d'éviter l'oxydation des ions $Ce^{3+}$, $Tb^{3+}$, et $Mn^{2+}$.

Le mélange de départ est chauffé jusqu'à la fusion complète, qui se produit généralement vers 1200-1400°C. La décomposition des carbonates a lieu vers 500°C. La vitesse de chauffage n'a pas d'influence sur la composition finale obtenue. Le chauffage peut être effectué sous courant gazeux d'azote ou d'argon. On continue de chauffer jusqu'à une température de 50 à 100°C au dessus de la température de fusion, et on maintient cette température pendant une heure, par exemple, pour obtenir une bonne homogénéité du mélange. La composition est ensuite refroidie brusquement (trempe) selon les méthodes usuelles, par exemple par coulage dans un moule de graphite ou de laiton. C'est bien entendu au moment de la trempe que l'on peut donner à la composition vitreuse la forme désirée, par exemple la forme d'un tube, selon les techniques usuelles. Généralement, on soumet ensuite la pièce vitreuse trempée à recuit à température inférieure à la température de transition vitreuse (Tg), par exemple 10 à 20°C au-dessous de Tg. Le recuit a pour but notamment de supprimer les contraintes mécaniques qui ont pu apparaître pendant la trempe. La vitesse de chauffage pendant le recuit est par exemple de 5°C à 10°C par minute.

La composition est maintenue, par exemple pendant 4 heures ou davantage, à la température de recuit, puis refroidie par exemple à une vitesse de 20-30°C/heure. La trempe et le recuit peuvent être réalisés sous atmosphère inerte, mais peuvent être généralement effectués à l'air sans inconvénient.

L'invention a également pour objet l'utilisation d'une composition vitreuse telle que définie précédemment comme substance luminescente, notamment pour réaliser des tubes de lampes d'éclairage fluorescentes. Les compositions vitreuses de l'invention possèdent une bonne stabilité lors du fonctionnement des tubes fluorescents qu'elles permettent de réaliser.

Les compositions de l'invention peuvent aussi être utilisées dans la fabrication d'objets divers, utilitaires ou décoratifs, que l'on souhaite rendre fluorescents. Les compositions de l'invention peuvent encore être utilisées comme agents de codage optique, notamment pour billets (billets de banque, billets d'entrée pour spectacles) et d'autres papiers spéciaux. Dans ce dernier cas, la composition est généralement utilisée sous la forme d'une suspension de poudre très fine de verre broyé dans un diluant approprié.

Les exemples suivants illustrent l'invention sans toutefois la limiter.

EXEMPLE 1 :
    Préparation d'une composition vitreuse de formule :

| 67 $B_2O_3$, | 15 $Li_2O$, | 9 BaO, |
|---|---|---|
| 2 $Al_2O_3$, | 1 $As_2O_3$, | 3 $La_2O_3$, |
| 1 MnO, | 1 $Ce_2O_3$, | 1 $Tb_2O_3$. |

On mélange les produits de départ indiqués ci-dessous, sous la forme de poudres, dans les proportions suivantes :

| Composés de départ | Quantités |
|---|---|
| $B_2O_3$ | 3,231 g |
| $Li_2CO_3$ | 0,768 g |
| $BaCO_3$ | 1,230 g |
| $Al_2O_3$ | 0,141 g |
| $As_2O_3$ | 0,137 g |
| $La_2O_3$ | 0,677 g |
| $MnCO_3$ | 0,080 g |
| $CeO_2$ | 0,239 g |
| $Tb_4O_7$ | 0,259 g |

On introduit le mélange de départ dans un creuset de carbone vitreux et porte l'ensemble à 500°C pendant 15 heures (décomposition des carbonates). La température est ensuite élevée à 1300°C pour amener le mélange réactionnel à fusion. Cette température est maintenue pendant une heure. La trempe du verre est effectuée dans un moule en graphite. Le traitement thermique était appliqué sous courant d'azote alors que la trempe était effectuée à l'air. L'échantillon est ensuite recuit à l'air pendant 4 heures à 490°C, puis refroidi jusqu'à température ambiante à la vitesse de 30°C par heure. Le bloc vitreux ainsi obtenu, de bonne qualité optique, était faiblement teinté en beige-rose.

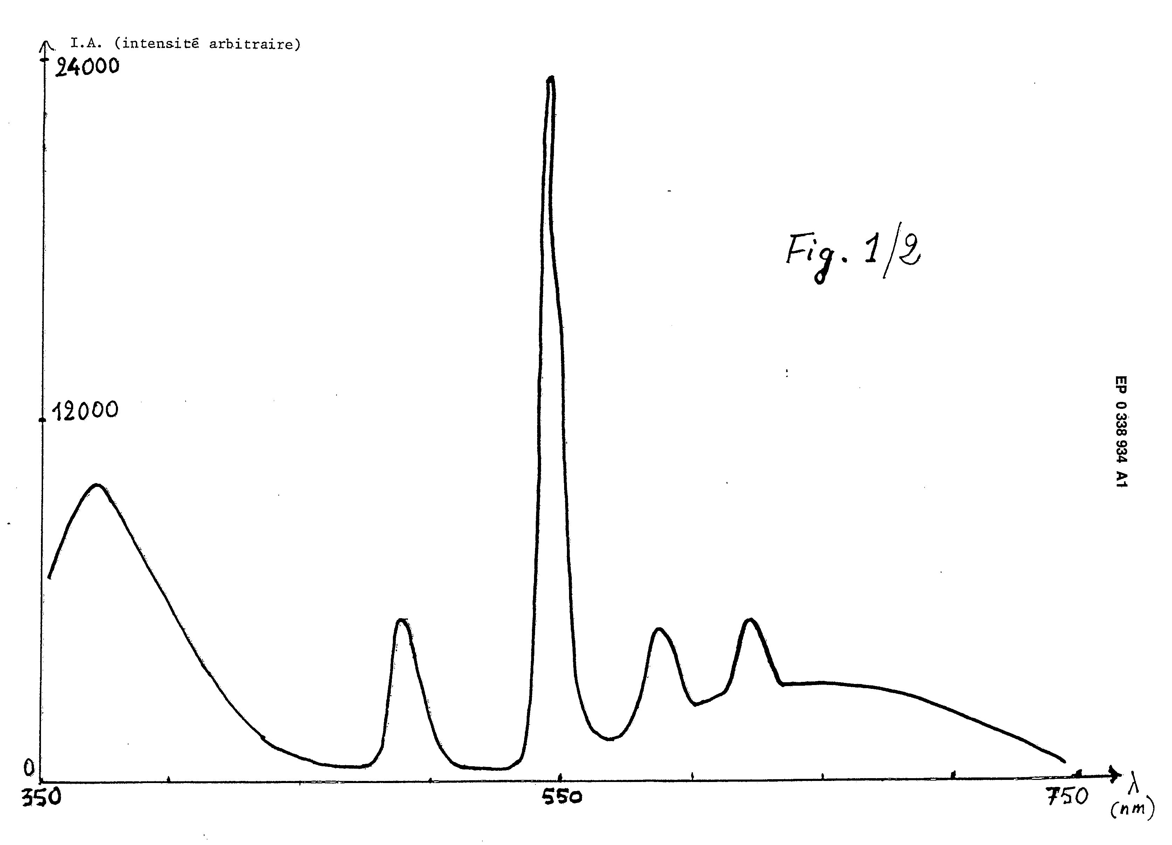

La figure 1 montre la répartition spectrale de l'émission du verre obtenu, par excitation avec la longueur d'onde 254 nm. Les coordonnées trichromatiques caractérisant l'émission de ce verre sont $x = 0,35$ et $y = 0,41$.

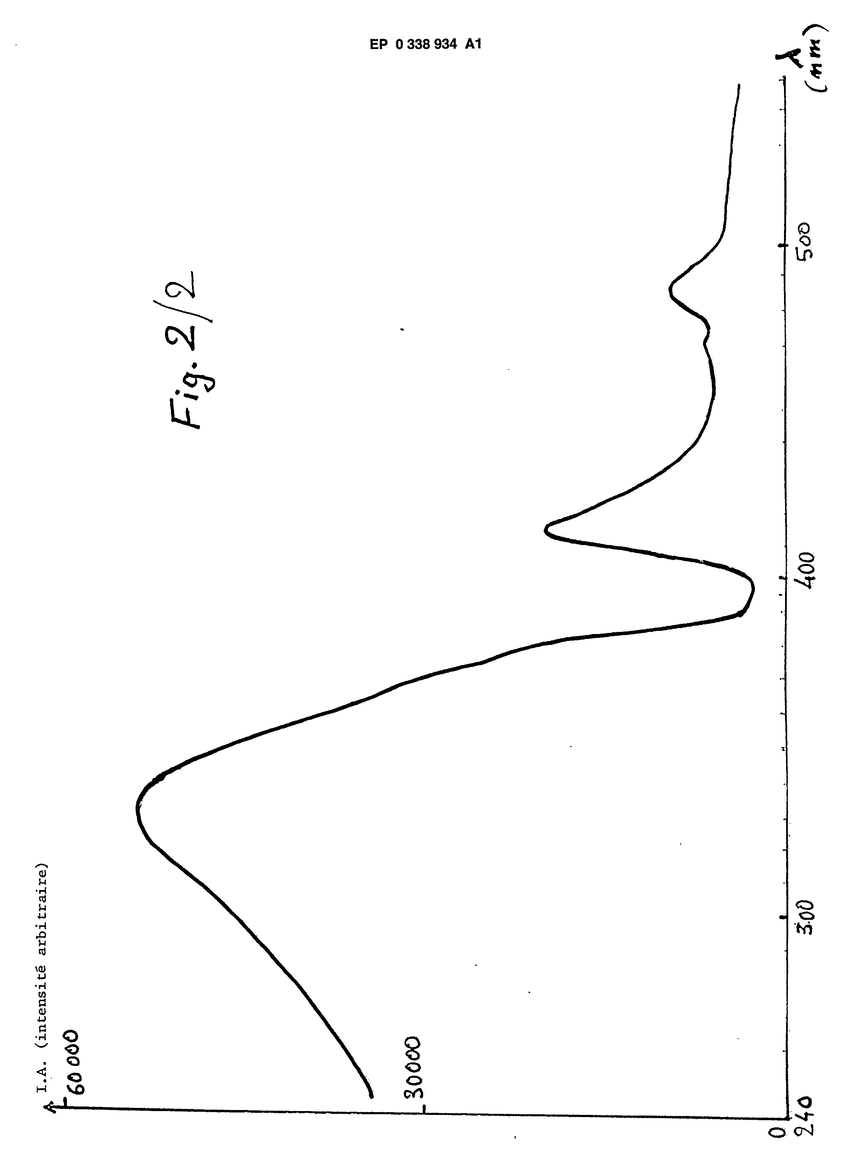

La figure 2 montre le spectre d'excitation pour une longueur d'onde d'émission de 650 nm.

La définition et l'utilisation des coordonnées trichromatiques sont décrites par exemple par S.Larach et al., Proceedings of the IEEE, Vol.61, N°7, Juillet 1973, pp.915-926.

EXEMPLES 2 à 5

De façon analogue, on a préparé les verres suivants :

| Exemple N° | Composition | Coordonnées trichromatiques | | |
|---|---|---|---|---|
| | | x | y | |
| 2 | $60B_2O_3, 21,5Li_2O, 10BaO$ $2Al_2O_3, 0,5As_2O_3, 3La_2O_3$ $1MnO, 1Ce_2O_3, 1Tb_2O_3$ | 0,32 | 0,39 | 0,29 |
| 3 | $67B_2O_3, 15Na_2O, 9BaO, 2Al_2O_3$ $1As_2O_3, 3La_2O_3, 1MnO,$ $1Ce_2O_3, 1Tb_2O_3$ | 0,32 | 0,41 | 0,27 |
| 4 | $67B_2O_3, 15Li_2O, 9CaO$ $2Al_2O_3, 1As_2O_3, 3La_2O_3,$ $1MnO, 1Ce_2O_3, 1Tb_2O_3$ | 0,36 | 0,44 | 0,20 |
| 5 | $67B_2O_3, 15Li_2O, 9BaO$ $2Al_2O_3, 1As_2O_3, 3Y_2O_3$ $1MnO, 1Ce_2O_3, 1Tb_2O_3$ | 0,36 | 0,44 | 0,20 |

**Revendications**

1.Composition vitreuse luminescente de formule :

| Ingrédients | Teneur (en mole %) |
|---|---|
| MnO | m |
| $Ce_2O_3$ | n |
| $Tb_2O_3$ | p |
| $Ln_2O_3$ | q . |
| Agent réducteur | t |
| Agent modificateur | u |
| Agent vitrificateur | v |

dans laquelle$Ln_2O_3$ représente au moins un oxyde d'yttrium, de scandium ou d'une terre rare choisie parmi La, Gd, Dy, Yb et Lu ;
l'agent réducteur est choisi parmi $As_2O_3$, $Sb_2O_3$ et leurs mélanges ;
l'agent modificateur est constitué par au moins un des oxydes suivants : oxyde de métal alcalin, oxyde de métal alcalino-terreux, $Al_2O_3$, MgO, ZnO,
l'agent vitrificateur est choisi parmi $B_2O_3$ et les mélanges ($B_2O_3$ + $SiO_2$) ne contenant pas plus de 20 mole % de $SiO_2$, m, n, p, q, t, u et v sont des nombres, dont la somme est égale à 100, pouvant varier dans les intervalles suivants :

| | | | |
|---|---|---|---|
| m : | 0,1 | à | 10 |
| n : | 0,1 | à | 5 |
| p : | 0,1 | à | 5 |
| q : | 0 | à | 10 |
| t : | 0,5 | à | 3 |
| u : | 10 | à | 38 |
| v : | 55 | à | 75 ; |

la teneur en oxyde de métal alcalin pouvant aller de 8% à 22%, la teneur en oxyde de métal alcalino-terreux pouvant aller de 5% à (15-m)%, la teneur en $Al_2O_3$ pouvant varier de 0 à 5%, la somme (q+u) étant au moins égale à 15, et les rapport n/m et n/p pouvant varier, indépendamment, de 0,8 à 1,2 environ.

2. Composition selon la revendication 1, caractérisées par le fait qu'elle présente au moins une des caractéristiques suivantes :- m est dans l'intervalle 0,4 à 2,5 et n et p dans l'intervalle 0,5 à 2 ;
- la somme (q+u) est au moins égale à 20 ;
- v est dans l'intervalle 60-75 ;
- l'agent vitrificateur est $B_2O_3$ ;
- l'oxyde de métal alcalino-terreux est l'oxyde de baryum ou de calcium ;
- l'oxyde de métal alcalin est l'oxyde de lithium, de sodium ou de potassium.

3. Procédé de préparation d'une composition vitreuse luminescente telle que définie dans l'une quelconque des revendications 1 et 2, caractérisé par le fait que l'on mélange les ingrédients de départ, sous forme de poudres d'oxydes ou de sels décomposables en oxydes correspondants, que l'on chauffe le mélange sous atmosphère inerte jusqu'à fusion complète, que l'on maintient le mélange à une température au moins égale à la température de fusion complète pendant un temps suffisant pour réaliser une bonne homogénéité du mélange fondu, et que l'on trempe le mélange selon les méthodes connues.

4. Procédé selon la revendication 3, caractérisé par le fait que lesdits sels décomposables sont des carbonates, des hydroxydes, des citrates ou des oxalates.

5. Utilisation d'une composition telle que définie dans l'une quelconque des revendications 1 et 2 comme substance luminescente.

6. Utilisation selon la revendication 5, consistant à réaliser avec ladite composition des tubes de lampes d'éclairage fluorescentes.

7. Utilisation selon la revendication 5, dans le but de réaliser un codage optique.

I.A. (intensité arbitraire)

24000

12000

Fig. 1/2

EP 0 338 934 A1

0

350          550          750

λ (nm)

Fig. 2/2

I.A. (intensité arbitraire)

60 000

30000

0

240          300          400          500

λ
(nm)

EP 0 338 934 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 638 983 (GLASWERKE G. FISCHER) * Revendications * --- | 1 | C 03 C 4/12 C 03 C 3/15 C 03 C 3/06 |
| A | FR-A-2 531 064 (SCHOTT GLASWERKE) * Revendications * --- | 1 | |
| A | EP-A-0 199 409 (N.V. PHILIPS' GLOEILAMPENFABRIEKEN) * Revendications * ----- | 1 | |

DOMAINES TECHNIQUES RECHERCHES (Int. Cl.4)

C 03 C

Le présent rapport a été établi pour toutes les revendications

| Lieu de la recherche | Date d'achèvement de la recherche | Examinateur |
|---|---|---|
| LA HAYE | 10-07-1989 | BOUTRUCHE J.P.E. |